# EUROPEAN PATENT APPLICATION

(11) **EP 3 750 719 A1**
(43) Date of publication of application: **16.12.2020**
(21) Application number: 19751294.0
(22) Date of filing: 29.01.2019
(51) Int. Cl.: B44C 3/02, B32B 7/023, G02B 27/22, G03B 35/00

(54) **DECORATIVE SHEET**

(30) Priority: 06.02.2018 JP 2018019018
(71) Applicant: FUJIFILM Corporation, Tokyo 106-8620 (JP)
(72) Inventor: NAKAMURA, Samito, Tokyo 107-0052 (JP)
(74) Representative: Klunker IP Patentanwälte PartG mbB
(86) International application number: PCT/JP2019/002888
(87) International publication number: WO 2019/155937

(57) **Abstract**

Provided is a decorative sheet capable of obtaining a visual effect that a design seems to move by using at least two images.

A decorative sheet (10) includes a lenticular lens sheet (11) and an image forming layer. The lenticular lens sheet (11) includes a plurality of cylindrical lenses (15). An image forming layer includes a first image (P1), a second image (P2), a third image (P3), and a fourth image (P4). The first image (P1) and the second image (P2) have the same design, but the first image (P1) is a focused image, and the second image (P2) is a defocused image out of focus. The same applies to a relationship between the third image (P3) and the fourth image (P4).

## Description

### BACKGROUND OF THE INVENTION

### 1. Field of the Invention

The present invention relates to a decorative sheet using a lenticular lens.

### 2. Description of the Related Art

Decorative sheets used for decoration of various products are known. Among the decorative sheets, there is a decorative sheet using a lenticular lens sheet (for example, see JP1999-212024A(JP-H11-212024A)). The decorative sheet using the lenticular lens sheet includes a lenticular lens sheet and an image forming layer. The lenticular lens sheet has a plurality of cylindrical lenses each having a convex shape, and has a flat surface on a side opposite to the convex shape. The image forming layer is formed on the flat surface side of the lenticular lens sheet. The image forming layer has, for example, two images, a first image and a second image. The first image includes a plurality of first divided images divided into strips, and the second image includes a plurality of second divided images into strips.

Within a unit region corresponding to one cylindrical lens, one first divided image and one second divided image are arranged along an arrangement direction of the cylindrical lens. In a case where an observation direction in which the image forming layer is observed through the lenticular lens sheet changes, an angle to be observed by a user changes with respect to the cylindrical lens. Thus, an image viewed by the user is only one of the first divided image and the second divided image according to the angle to be observed. Accordingly, the first image and the second image to be viewed are switched.

### SUMMARY OF THE INVENTION

A decorative sheet using a lenticular lens sheet of the related art as described in JP1999-212024A(JP-H11-212024A) is used for various purposes. For example, a design which is a content of each of two images is changed, and thus, the user views different designs according to an observation direction, or stereoscopically views the designs by using two images having the same design and parallax.

The inventor has examined an idea to further improve such a decorative sheet and obtain a visual effect that a design seems to move by switching a plurality of images with a simple configuration. In the decorative sheet using the lenticular lens described in JP1999-212024A(JP-H11-212024A), two images can be separately observed, but the visual effect that the design seems to move is not obtained.

An object of the present invention is to provide a decorative sheet capable of obtaining a visual effect that a design seems to move by using at least two images.

A decorative sheet of the present invention has a lenticular lens sheet and an image forming layer. A first divided image and a second divided image are arranged along an arrangement direction of a cylindrical lens within a unit region corresponding to the cylindrical lens. A first image and a second image are switched in a case where an observation direction in which the image forming layer is observed through the lenticular lens sheet changes. The first image is a focused image that is relatively in focus compared to the second image, and the second image is a defocused image on which defocus processing for relatively defocusing the image is performed compared to the first image. The lenticular lens sheet has a plurality of cylindrical lenses each having a convex shape, and has a flat surface on a side opposite to the convex shape. The image forming layer is formed on the flat surface side, includes the first image and the second image. The first image includes a plurality of first divided images divided into strips, and the second image includes a plurality of second divided images divided into strips.

It is preferable that the first image and the second image are images having the same design and the first image is the focused image, and the second image is the defocused image.

It is preferable that the image forming layer includes a third image having a design different from the design of the first image and the second image in addition to the first image and the second image and the first divided image, the second divided image, and a third divided image obtained by dividing the third image into strips are arranged in this order in the unit region.

It is preferable that the image forming layer further includes a fourth image, the third image and the fourth image are images having the same design, the third image is the focused image, and the fourth image is the defocused image and the first divided image, the third divided image, the second divided image, and a fourth divided image are arranged in this order in the unit region.

It is preferable that a size of the design of the defocused image is larger than a size of the design of the focused image in a set of the focused image and the defocused image having the same design.

A width of the focused image may be relatively wider than a width of the defocused image in the arrangement direction of the defocused image and the focused image in the unit region.

A width of the defocused image may be relatively wider than a width of the defocused image in the arrangement direction of the focused image and the focused image in the unit region.

The focused image may include a focused region that is arranged in a center within the image, and a defocused region that is arranged around the focused region and in which the defocus processing is performed.

It is preferable that a face of a person appears in the focused region, and a background of the person appears in the defocused region.

According to the present invention, since the decorative sheet using the lenticular lens sheet has the image forming layer formed by combining the focused image and the defocused image on which the defocus processing for defocusing is performed, it is possible to obtain a visual effect that a design seems to move by using at least two images.

### BRIEF DESCRIPTION OF THE DRAWINGS

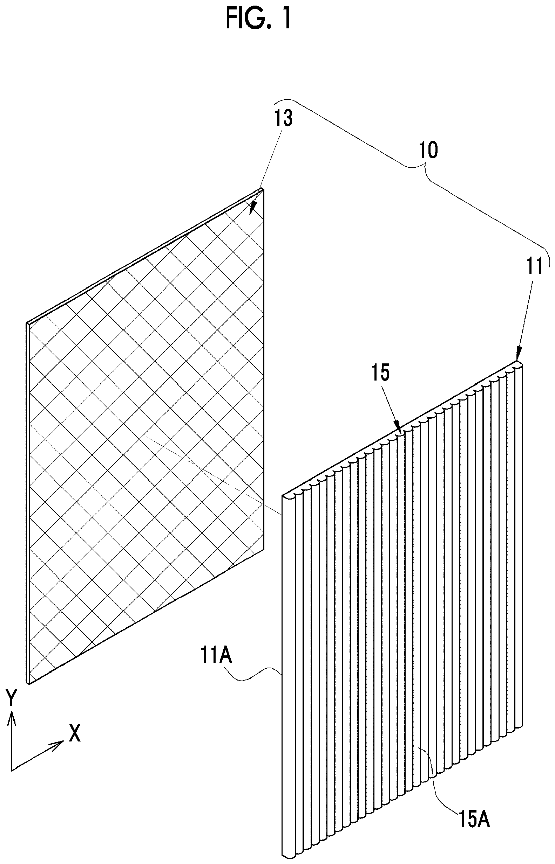

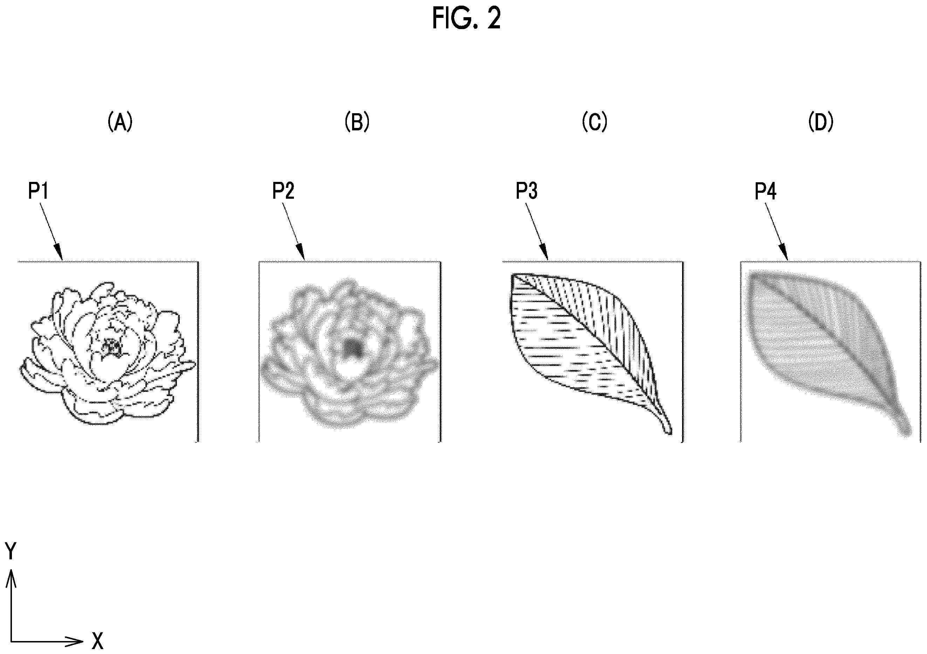

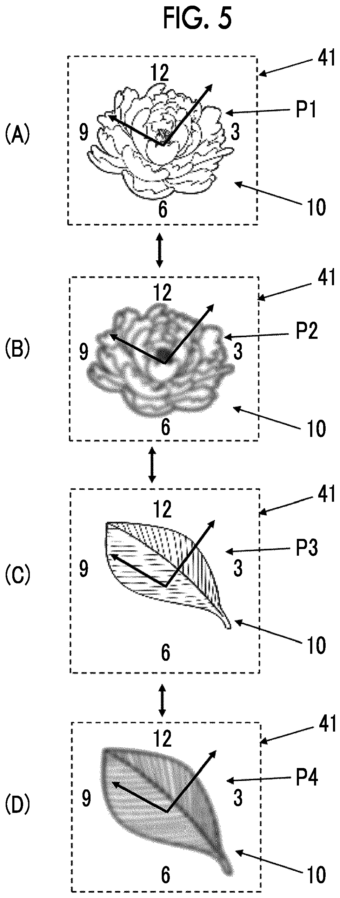

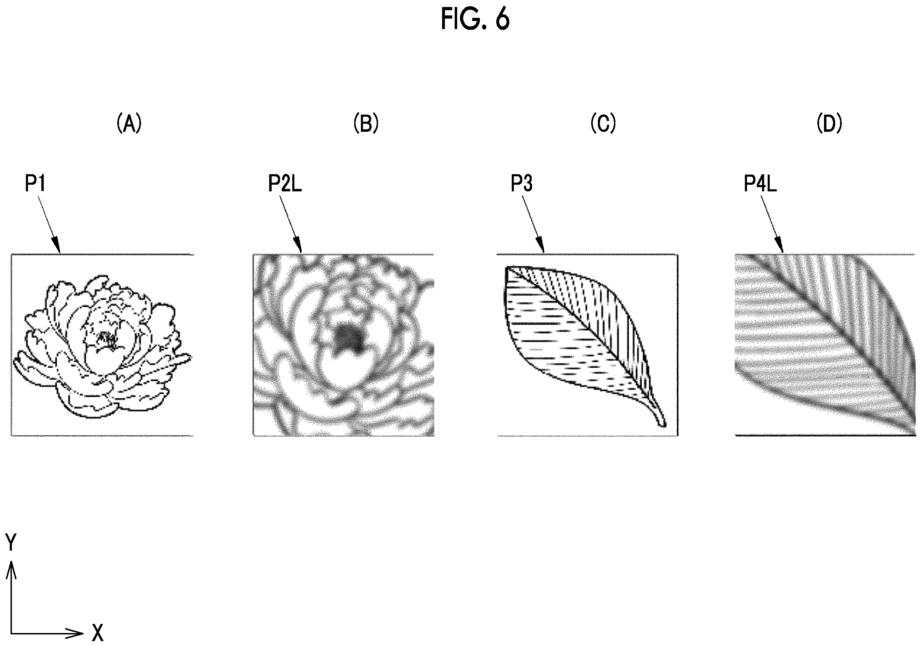

Fig. 1 is a perspective view for describing a configuration of a decorative sheet of the present invention.
(A) to (D) of Fig. 2 are explanatory diagrams for describing images to be observed in a case where the decorative sheet is observed through a cylindrical lens. (A) of Fig. 2 shows a first image, (B) of Fig. 2 shows a second image, (C) of Fig. 2 shows a third image, and (D) of Fig. 2 shows a fourth image.
Fig. 3 is an explanatory diagram of a plurality of divided images arranged within a unit region of a cylindrical lens.
Fig. 4 is a transverse cross-sectional view of a main part of the decorative sheet cut along an arrangement direction of the cylindrical lens.
(A) to (D) of Fig. 5 are explanatory diagrams in a case where the decorative sheet is used for a dial of a wristwatch. (A) of Fig. 5 shows a state in which the first image is viewed, (B) of Fig. 5 shows a state in which the second image is viewed, and (C) of Fig. 5 shows a state in which the third image is viewed.
(A) to (D) of Fig. 6 are explanatory diagrams of a second embodiment in which a size of a design of a defocused image increases.

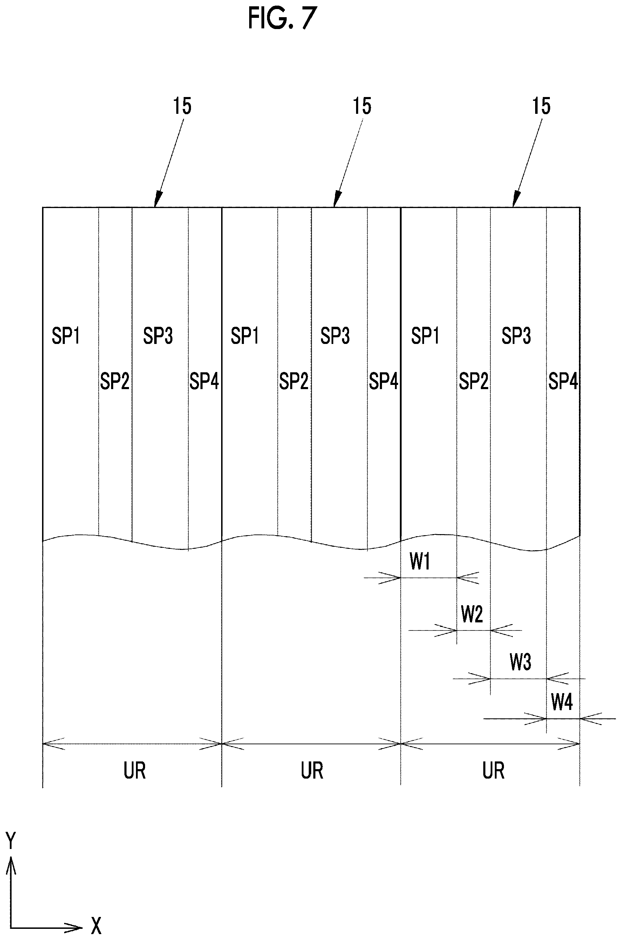

Fig. 7 is an example in which a ratio of a width of the focused image is relatively large within the unit region.

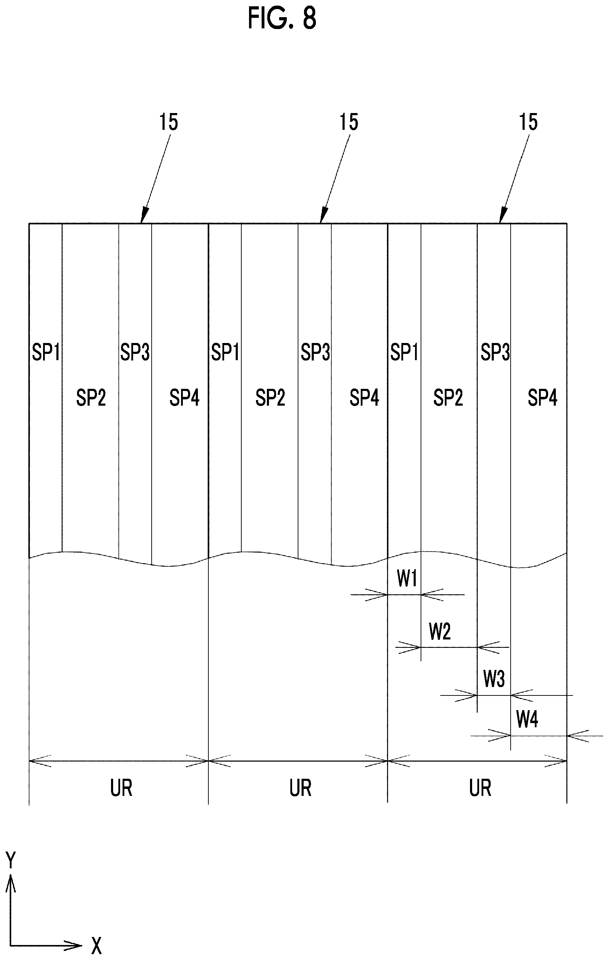

Fig. 8 is an example in which a ratio of a width of a defocused image within the unit region is relatively large.

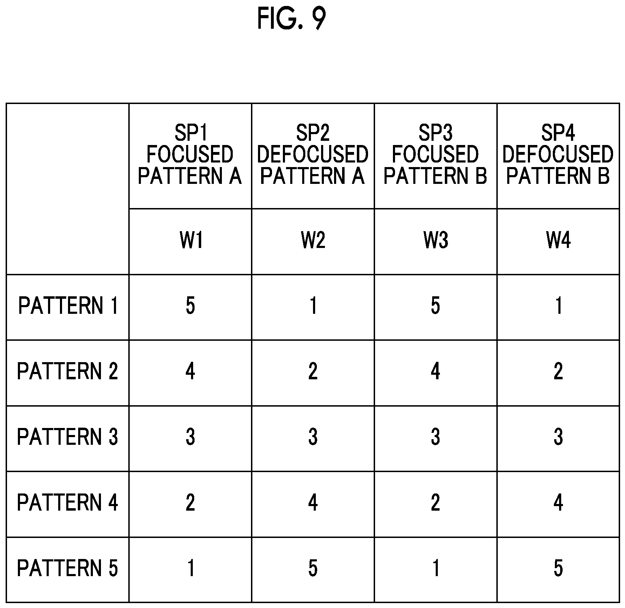

Fig. 9 is a table showing a combination pattern of ratios of the width of a focused image and the width of a defocused image within the unit region.

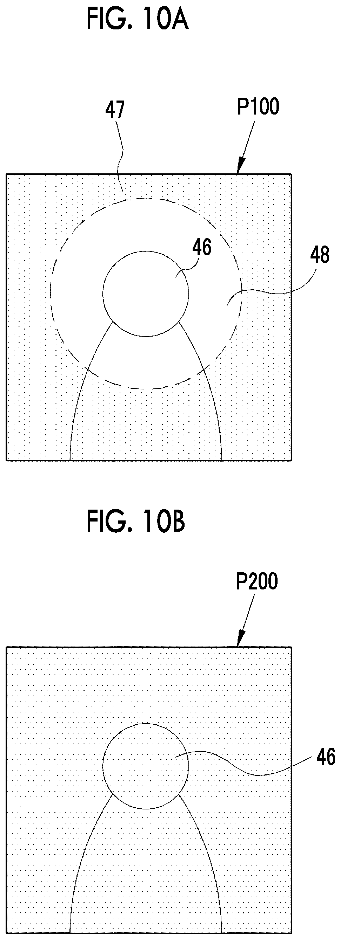

Figs. 10A and 10B are explanatory diagrams of examples in which a part of the focused image includes a defocused region.

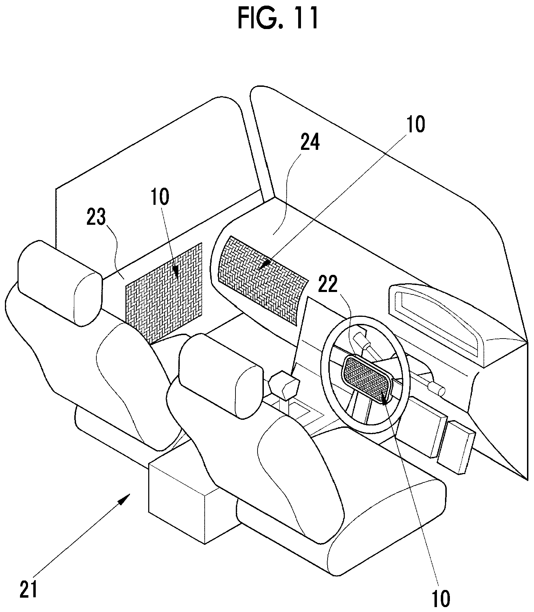

Fig. 11 is a perspective view showing an example in which the decorative sheet is attached to an interior component of a vehicle.

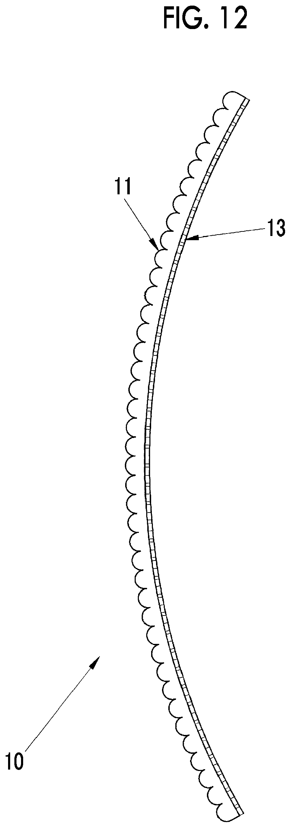

Fig. 12 is a cross-sectional view showing a state in which the decorative sheet is curved.

### DESCRIPTION OF THE PREFERRED EMBODIMENTS

### [First embodiment]

As shown in Fig. 1, a decorative sheet 10 comprises a lenticular lens sheet 11 and an image forming layer 13. The image forming layer 13 and the lenticular lens sheet 11 are shown as being separated from each other in Fig. 1 for the sake of convenience, but the image forming layer 13 is actually formed on one surface of the lenticular lens sheet 11.

The lenticular lens sheet 11 includes a plurality of cylindrical lenses 15. Each cylindrical lens 15 has a semi-cylindrical convex shape 15A, and a side opposite to the convex shape 15A is flat. Each of the cylindrical lenses 15 has a longitudinal direction extending in a Y direction, and is arranged in parallel with an adjacent cylindrical lens 15. That is, the cylindrical lenses 15 are arranged at predetermined pitches in an X direction orthogonal to the Y direction. In the present example, the X direction is a direction in which the plurality of cylindrical lenses 15 is arranged. The lenticular lens sheet 11 has a flat surface 11A on the side opposite to the convex shape 15A.

A transparent resin material such as polyethylene terephthalate (PET), polypropylene (PP), glycol-modified polyethylene terephthalate (PETG), polycarbonate, acrylic, or acrylate resin is used as a material of the lenticular lens sheet 11.

The image forming layer 13 is formed on the flat surface 11A side of the lenticular lens sheet 11. The image forming layer 13 is directly formed on the flat surface 11A by printing or transferring an image on the flat surface 11A. A material of the image forming layer 13 is not particularly limited as long as the material can adhere to the flat surface 11A of the lenticular lens sheet 11, and a known paint is used.

The image forming layer 13 may not be directly formed on the lenticular lens sheet 11. For example, the image forming layer 13 may be formed on a transparent sheet different from the lenticular lens sheet 11, and this transparent sheet may be bonded to the lenticular lens sheet 11 by using a method such as adhesion or pressure sensitive adhesion. It is preferable that a transparent material is used as a bonding agent such as an adhesive or a pressure sensitive adhesive such that the image forming layer 13 can be observed through the lenticular lens sheet 11.

As shown in (A) to (D) of Fig. 2, the image forming layer 13 includes, for example, a first image P1 shown in (A) of Fig. 2, a second image P2 shown in (B) of Fig. 2, a third image P3 shown in (C) of Fig. 2, and a fourth image P4 shown in (D) of Fig. 2. The first image P1 and the second image P2 are images having the same design, and the design is, for example, a flower. The first image P1 and the second image P2 have the same design, but the first image P1 is a focused image and the second image is a defocused image. Here, the focused image is an image that is relatively in focus compared to the defocused image, and the defocused image is an image on which defocus processing for relatively defocusing the image is performed compared to the focused image.

The defocus processing is blurriness processing for blurring the design. The blurriness processing includes, for example, blurriness processing for averaging colors of pixels by using colors of surrounding pixels. In this case, blurriness increases by increasing the number of pixels to be averaged. The blurriness processing includes mosaic processing and sharpness suppression processing.

Similarly to a relationship between the first image P1 and the second image P2, the third image P3 and the fourth image P4 are images having the same design, and the design is, for example, a leaf. Although the third image P3 and the fourth image P4 have the same design, the third image P3 is the focused image, and the fourth image is the defocused image.

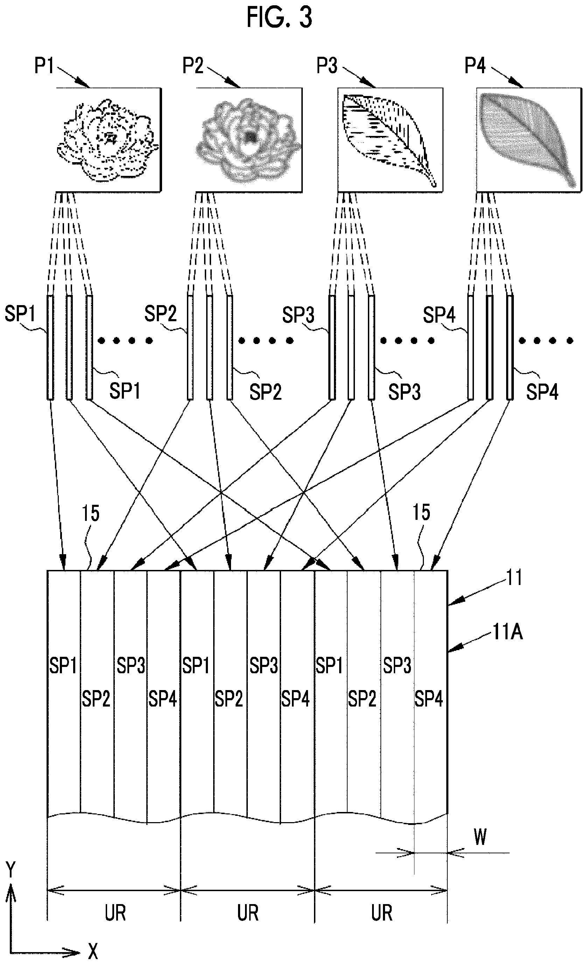

As shown in Fig. 3, the first image P1 and the second image P2 include a plurality of first divided images SP1 and a plurality of second divided images SP2 that are divided into strips, respectively. The third image P3 and the fourth image P4 also include third divided images SP3 and fourth divided images SP4 divided into strips, respectively. A part of the design of the first image P1 is drawn in each of the plurality of first divided images SP1. The same applies to the second divided image SP2, the third divided image SP3, and the fourth divided image SP4.

The first divided images SP1 are arranged on the flat surface 11A of the lenticular lens sheet 11, along the Y direction in the longitudinal direction. In other words, the longitudinal direction of the first divided images SP1 is arranged along the longitudinal direction (Y direction) of the cylindrical lens 15. The same applies to the second divided image SP2, the third divided image SP3, and the fourth divided image SP4.

On the flat surface 11A of the lenticular lens sheet 11, one first divided image SP1, one second divided image SP2, one third divided image SP3, and one fourth divided image SP4 are arranged in each unit region UR corresponding to the cylindrical lens 15. That is, in one unit region UR, a set of four divided images of the first divided image SP1, the second divided image SP2, the third divided image SP3, and the fourth divided image SP4 is arranged.

Since the first divided image SP1 and the third divided image SP3 are focused images and the second divided image SP2 and the fourth divided image SP4 are defocused images, the focused images and the defocused images are alternately arranged within each unit region UR.

A width of the unit region UR in the X direction corresponds to a width of the cylindrical lens 15 in the X direction. In the present example, the first divided image SP1, the second divided image SP2, the third divided image SP3, and the fourth divided image SP4 have the same width W. W is 1/4 of the width of the unit region UR in the X direction, and the width of the unit region UR in the X direction is expressed by 4 × W = 4W by using W.

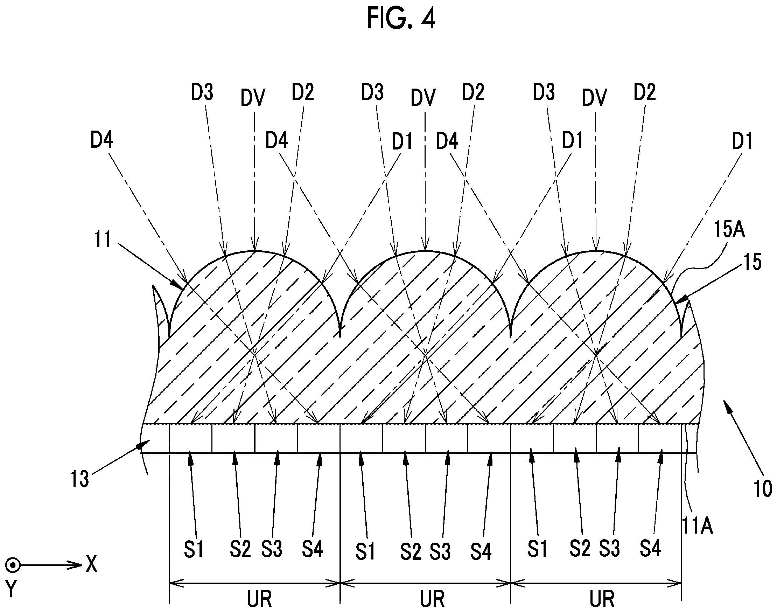

Fig. 4 shows a cross section of the decorative sheet 10 in the X direction. As shown in Fig. 4, the decorative sheet 10 is observed from a side having the convex shape 15A of the lenticular lens sheet 11. A curvature of the convex shape 15A of the cylindrical lens 15 is set such that a focal point is located on the image forming layer 13.

Within each unit region UR shown in Fig. 4, the first divided image SP1, the second divided image SP2, the third divided image SP3, and the fourth divided image SP4 are arranged in order from the left. Due to an action of each cylindrical lens 15, the image of the first divided image SP1, the second divided image SP2, the third divided image SP3, and the fourth divided image SP4 within each unit region UR which is viewed by a user changes in an observation direction.

In a case where the image forming layer 13 of the decorative sheet 10 is observed from a first direction D1 inclined to the right from an orthogonal direction DV to the flat surface 11A, only the first divided image SP1 is observed. In a case where the image forming layer 13 of the decorative sheet 10 is observed from a second direction D2 between the first direction D1 and the orthogonal direction DV, only the second divided image SP2 is observed. In a case where the image forming layer 13 of the decorative sheet 10 is observed from a fourth direction D4 inclined to the left from the orthogonal direction DV, only the fourth divided image SP4 is observed. In a case where the image forming layer 13 of the decorative sheet 10 is observed from a third direction D3 between the fourth direction D4 and the orthogonal direction DV, only the third divided image SP3 is observed.

A part of the flower design of the first image P1 which is the focused image is formed in the first divided image SP1. A part of the design of the second image P2 which is the defocused image having the same flower design as the flower design of the first image P1 is formed in the second divided image SP2. A part of the leaf design of the third image P3 which is the focused image is formed in the third divided image SP3. A part of the design of the fourth image P4 which is the defocused image of the same leaf design as the leaf design of the third image P3 is formed in the fourth divided image SP4.

Therefore, an observation direction in which the decorative sheet 10 is observed through the lenticular lens sheet 11 changes in the order of the first direction D1, the second direction D2, the third direction D3, and the fourth direction D4, and thus, the first image P1 that is the focused image having the flower design, the second image P2 that is the defocused image having the flower design, the third image P3 that is the focused image having the leaf design, and the fourth image P4 that is the defocused image having the leaf design are observed in order.

Actions of the aforementioned configuration will be described with reference to (A) to (D) of Fig. 5. (A) to (D) of Fig. 5 show examples in which the decorative sheet 10 is used for a dial of a wristwatch 41. In (A) to (D) of Fig. 5, in the wristwatch 41, a long hand and a short hand indicate about 10:05. The decorative sheet 10 is used for a dial having a background of the long hand and the short hand. In a case where the observation direction with respect to the dial for which the decorative sheet 10 is used changes, an image to be viewed is switched to each image of the first image P1 to the fourth images P4. (A) of Fig. 5 shows a state in which the first image P1 is viewed, (B) of Fig. 5 shows a state in which the second image P2 is viewed, (C) of Fig. 5 shows a state in which the third image P3 is viewed, and (D) of Fig. 5 shows a state in which the fourth image P4 is viewed.

Since the first image P1 is the focused image, the flower design is clearly viewed. In contrast, since the second image P2 is the defocused image, the second image is viewed in a state in which the flower design is blurred. Therefore, in a case where the second image P2 is switched to the first image P1, since the blurred flower design is switched to the clear flower design, a visual effect that the flower seems to rise from the dial occurs. Conversely, in a case where the first image P1 is switched to the second image P2, since the clear flower design is switched to the blurred flower design, a visual effect that the flower seems to sink into the dial occurs.

Thus, a visual effect that the flower design seems to move occurs by switching between the first image P1 that is the focused image and the second image P2 that is the defocused image. The visual effect occurred by switching between the third image P3 that is the focused image and the fourth image P4 which is the defocused image is the same as the visual effect occurred by switching between the first image P1 and the second image P2.

In this example, in a case where the focused image and the defocused image having the same design are one set, the image forming layer 13 has two sets of a set of the first image P1 and the second image P2 and a set of the third image P3 and the fourth image P4. The present invention is not limited to this example, the image forming layer 13 may have three or more sets of the focused image and the defocused image, or may have one set. For example, the image forming layer 13 may include only one set of the first image P1 and the second image P2. In this case, one first divided image SP1 and one second divided image SP2 are arranged within the unit region UR. As described above, in a case where there is one set of the focused image and the defocused image, the visual effect that the design seems to move can be obtained.

Therefore, it is possible to obtain the visual effect that the design seems to move by using at least two images without complicating the configuration of the image forming layer 13.

In a case where two sets of the focused image and the defocused image are provided as in the present example, the visual effect that the design seems to move while switching different designs can be obtained. A combination of three images such as two focused images and one defocused image may be used. For example, three images of the first image P1, the second image P2, and the third image P3 are provided as one set, and one set is provided for each unit region UR. Even in this case, the visual effect that the design seems to move due to a change in the observation direction can be obtained by sandwiching the defocused image between two focused images having different designs.

The image forming layer 13 may have one set of the focused image and the defocused image, and in this case, it is preferable that the focused image and the defocused image have the same design. However, different designs may be used. Even in a case where the designs are different, a case where the visual effect that the design of the focused image seems to move is obtained in some designs by switching between the focused image and the defocused image is confirmed through an experiment.

### [Second embodiment]

A second embodiment shown in (A) to (D) of Fig. 6 is an example in which a size of the design of the defocused image is larger than a size of the design of the focused image in the set of the focused image and the defocused image having the same design. In (A) to (D) of Fig. 6, the first image P1 shown in (A) of Fig. 6 and the third image P3 shown in (C) of Fig. 6 are both the focused images, and are the same as the first image P1 and the third image P3 in the first embodiment.

A second image P2L shown in (B) of Fig. 6 is the defocused image of the first image P1 having the same flower design, and a size of the flower design of the second image P2L is larger than a size of the flower design of the first image P1. Specifically, the design of the second image is about 5% larger than the design of the first image P1. The same applies to a relationship between the third image P3 shown in (C) of Fig. 6 and a fourth image P4L shown in (D) of Fig. 6. The fourth image P4L shown in (D) of Fig. 6 is the defocused image of the third image P3 having the same leaf design, and ae size of the leaf design of the fourth image P4L is larger than a size of the leaf design of the third image P3. Specifically, the design of the fourth image is about 5% larger than the design of the third image P3.

In this manner, it is possible to further enhance the visual effect that the design seems to rise by setting the size of the design of the defocused image to be larger than the size of the design of the focused image.

### [Third embodiment]

A third embodiment shown in Figs. 7 and 8 is an example in which the widths of the divided images SP1 to SP4 in the X direction which is the arrangement direction thereof in the unit region UR change. In the example shown in Fig. 7, the width of the focused image is wider than the width of the defocused image in the arrangement direction (X direction) of the focused image and the defocused image. Specifically, in a case where the width of the first divided image SP1 of the focused image in the X direction is W1 and the width of the second divided image SP2 of the defocused image is W2, W1 > W2. In a case where the width of the third divided image SP3 that is the focused image is W3 and the width of the fourth divided image SP4 of the defocused image is W4, W3 > W4.

In this manner, it is possible to give an impression that the design sharply moves in the visual effect that the design seems to move setting the width of the focused image in the arrangement direction (X direction) to be wider than the width of the defocused image in the unit region UR.

Contrary to the example shown in Fig. 7, the width of the defocused image is wider than a width of the defocused image in the arrangement direction (X direction) of the focused image and the defocused image are in the example shown in Fig. 8. Specifically, in a relationship between the first divided image SP1 that is the focused image and the second divided image SP2 that is the defocused image, W1 < W2. In a relationship between the third divided image SP3 that is the focused image and the fourth divided image SP4 that is a defocused image, W3 < W4.

Contrary to the example illustrated in Fig. 7, since the width of the defocused image in the arrangement direction (X direction) is set to be wider than the width of the focused image in the unit region UR, and thus, an impression that the design slowly moves can be given in the visual effect that the design seems to move as in the example illustrated in Fig. 8.

Fig. 9 is a table illustrating patterns of ratios of widths W1 to W4 in a case where four divided images of the first divided image SP1 to the fourth divided image SP4 are arranged within the unit region UR. In the present example, a design A is the flower, and a design B is the leaf.

A pattern 1 and a pattern 2 are patterns corresponding to the example shown in Fig. 7 in which the focused image is wider than the defocused image. In the pattern 1, the width W1 of the focused image is W1 = W3 = 5, while the width W2 of the defocused image is W2 = W4 = 1. In the pattern 2, the width W1 of the focused image is W1 = W3 = 4, whereas the width W2 of the defocused image is W2 = W4 = 2. In a case where the pattern 1 and the pattern 2 are compared, the pattern 1 having a wider ratio of the width of the focused image gives a sharper impression of the movement of the design in the visual effect.

A pattern 3 is an example in which the widths W1 to W4 have the same width. This corresponds to the first embodiment.

Patterns 4 and 5 are patterns corresponding to the example shown in Fig. 8 in which the width of the defocused image is wider than the width of the focused image. In the pattern 4, the width W1 of the focused image is W1 = W3 = 2, whereas the width W2 of the defocused image is W2 = W4 = 4. In the pattern 5, the width W1 of the focused image is W1 = W3 = 1, whereas the width W2 of the defocused image is W2 = W4 = 5. In a case where the pattern 4 and the pattern 5 are compared, the pattern 5 having a wider ratio of the width of the focused image gives an impression that the movement of the design is slower in the visual effect.

As described above, the impression of the movement of the design can be changed by changing the ratio between the width of the focused image and the width of the defocused image within the unit region. These ratios are appropriately decided according to which kind of visual effect is emphasized or compatibility with the design.

### [Fourth embodiment]

A fourth embodiment shown in Figs. 10A and 10B is an example in which a first image P100 and a second image P200 are combined as the combination of the first image that is the focused image and the second image that is the defocused image which constitute the image forming layer 13. The first image P100 and the second image P200 have the same design, that is, a design in which a person appears as a subject 46. The second image P200 is the defocused image on which the defocus processing is performed on the entire region within the image. In contrast, the first image P100 includes a defocused region 47 in which the defocus processing is performed on a part within the image, and the other region 48 is a focused image that is a focused region being in focus.

In the first image P100, the focused region 48 being in focus is, for example, a region in which a face of the person that is the subject 46 appears. Meanwhile, a background of a person appears in the defocused region 47. In the case of such a combination of the first image P100 and the second image P200, in a case where the observation direction changes and the first image P100 and the second image P200 are switched, a visual effect that only a portion of the face of the subject 46 within the region 48 seems to rise occurs. As described above, the entire surface of the focused image may not be in focus, and may include the defocused region 47 in which the defocus processing is partially performed. In the case of the present example, a visual effect that only the design within the focused region 48 being in focus other than the entire focused image seems to move occurs.

Hereinafter, various usage modes of the decorative sheet 10 of the present invention will be described. Fig. 11 shows an example in which the decorative sheet 10 is attached to an interior component of a vehicle 21. The decorative sheet 10 is attached such that the image forming layer 13 side comes into contact with the interior component.

The decorative sheet 10 is attached to, for example, a steering wheel 22, a door panel 23, and a dashboard 24 of the vehicle 21. Since the decorative sheet 10 has flexibility, the decorative sheet is attached in a state of being curved according to a curved surface of an attachment portion. For example, in the example shown in Fig. 11, a surface of the dashboard 24 is a curved surface, and the decorative sheet 10 is curved according to a shape of the curved surface. As shown in Fig. 12, the lenticular lens sheet 11 has flexibility, and can be curved.

As other purposes of the decorative sheet 10, for example, the decorative sheet may be used as a mount for a calendar, or may be used for various decorations such as wall decoration for decorating a wall. The decorative sheet may be used for decoration of electric appliances such as smartphones and tablets and decoration of articles such as furniture.

Although it has been described that the flower or the leaf is used as an example of the design of each image such as the first image P1 and the second image P2, any design may be used. As shown in Figs. 10A and 10B, photographs in which a person appears may be used. The present invention is not limited to a design in which a clear subject such as the flower, the leaf, or the person is drawn, but various patterns such as a dot pattern and a marble pattern may be used.

### Explanation of References

- 10:: decorative sheet
- 11:: lenticular lens sheet
- 11A:: flat surface
- 13:: image forming layer
- 15:: cylindrical lens
- 15A:: convex shape
- 21:: vehicle
- 22:: steering wheel
- 23:: door panel
- 24:: dashboard
- 41:: wristwatch
- 46:: subject
- 47, 48:: region
- D1:: first direction
- D2:: second direction
- D3:: third direction
- D4:: fourth direction
- DV:: orthogonal direction
- P1, P100:: first image
- P2, P2L, P200:: second image
- P3:: third image
- P4, P4L:: fourth image
- SP1:: first divided image
- SP2:: second divided image
- SP3:: third divided image
- SP4:: fourth divided image
- UR:: unit region
- W, W1, W2:: width

## Claims

1. A decorative sheet comprising:
a lenticular lens sheet that has a plurality of cylindrical lenses each having a convex shape, and has a flat surface on a side opposite to the convex shape; and
an image forming layer that is formed on the flat surface side, and includes a first image and a second image, the first image including a plurality of first divided images divided into strips and the second image including a plurality of second divided images divided into strips,
wherein the first divided image and the second divided image are arranged along an arrangement direction of the cylindrical lens within a unit region corresponding to the cylindrical lens, and the first image and the second image are switched in a case where an observation direction in which the image forming layer is observed through the lenticular lens sheet changes, and
the first image is a focused image that is relatively in focus compared to the second image, and the second image is a defocused image on which defocus processing for relatively defocusing the image is performed compared to the first image.

2. The decorative sheet according to claim 1,
wherein the first image and the second image are images having the same design, and the first image is the focused image, and the second image is the defocused image.

3. The decorative sheet according to claim 2,
wherein the image forming layer includes a third image having a design different from the design of the first image and the second image in addition to the first image and the second image, and
the first divided image, the second divided image, and a third divided image obtained by dividing the third image into strips are arranged in this order in the unit region.

4. The decorative sheet according to claim 3,
wherein the image forming layer further includes a fourth image,
the third image and the fourth image are images having the same design,
the third image is the focused image, and the fourth image is the defocused image, and
the first divided image, the third divided image, the second divided image, and a fourth divided image obtained by dividing the fourth image into strips are arranged in this order in the unit region.

5. The decorative sheet according to any one of claims 1 to 4,
wherein a size of the design of the defocused image is larger than a size of the design of the focused image in a set of the focused image and the defocused image having the same design.

6. The decorative sheet according to any one of claims 1 to 5,
wherein a width of the focused image is relatively wider than a width of the defocused image in the arrangement direction of the defocused image and the focused image in the unit region.

7. The decorative sheet according to any one of claims 1 to 5,
wherein a width of the defocused image is relatively wider than a width of the focused image in the arrangement direction of the defocused image and the focused image in the unit region.

8. The decorative sheet according to any one of claims 1 to 7,
wherein the focused image includes a focused region that is arranged in a center within the image, and a defocused region that is arranged around the focused region and in which the defocus processing is performed.

9. The decorative sheet according to claim 8,
wherein a face of a person appears in the focused region, and a background of the person appears in the defocused region.
